# EUROPEAN PATENT APPLICATION

(11) **EP 4 776 396 A1**
(43) Date of publication of application: **15.07.2026**
(21) Application number: 25220244.5
(22) Date of filing: 02.12.2025
(51) Int. Cl.: H01M 50/178, H01M 50/183, H01M 50/186, H01M 50/209, H01M 50/211, H01M 50/24, H01M 50/249, H01M 50/258, H01M 50/271

(54) **BATTERY PACK AND ELECTRIC DEVICE**

(30) Priority: 13.01.2025 CN 202510047354
(71) Applicant: Zhuhai Cosmx Power Supply Co., Ltd., Zhuhai, Guangdong 519040 (CN)
(72) Inventor: ZHOU, Yi'an, Zhuhai, 519040 (CN); MA, Ling, Zhuhai, 519040 (CN); YE, Benyu, Zhuhai, 519040 (CN); WANG, Zhenlin, Zhuhai, 519040 (CN)
(74) Representative: Murgitroyd & Company

(57) **Abstract**

The present application provides a battery pack and an electric device, the battery pack including a housing, battery cells, a busbar member, and a sealing member. A plurality of battery cells provided and located within the housing. The busbar member is connected to electrode tabs of the battery cells. The sealing member is configured to seal the busbar member and the electrode tabs and is provided with grooves and/or holes. The sealing member that seals the busbar member and the electrode tabs is formed by curing an adhesive. During the curing of the adhesive into the sealing member, a removable mold or a non-removable mold is provided to form the grooves and/or the holes in the sealing member.

## Description

### TECHNICAL FIELD

The present application relates to the technical field of batteries, and in particular, to a battery pack and an electric device.

### BACKGROUND

With the rapid development of battery technology, battery packs are applied in an increasing number of fields. The battery packs supply electrical energy for the normal operations of electric devices. On the premise that the battery packs satisfy normal functional requirements, reducing the weight of the battery packs is an urgent problem to be addressed by a person skilled in the art.

### SUMMARY

In view of this, the present application provides a battery pack to solve the problem of excess weight of battery packs. The present application further provides an electric device including the above battery pack.

To achieve the above object, the present application provides the following technical solutions:
A battery pack, including:
a housing;
a plurality of battery cells located within the housing;
a busbar member connected to electrode tabs of the battery cells; and
a sealing member for sealing the busbar member and the electrode tabs and provided with holes and/or grooves.

Optionally, the sealing member is provided with fixing recesses for accommodating and fixing the electrode tabs, the grooves does not communicate with the fixing recesses, and/or the holes does not communicate with the fixing recesses.

Optionally, the battery pack further includes a potting cover, wherein the potting cover is connected to the busbar member and receives the sealing member that seals the busbar member and the electrode tabs.

Optionally, the sealing member encapsulates heads of the electrode tabs and the busbar member, and a surface of the sealing member close to the potting cover abuts against the potting cover.

Optionally, a weight-reducing portion projects from a side of the potting cover facing the battery cells, the weight-reducing portion has a density lower than a density of the sealing member; and/or a weight-reducing member is provided on the side of the potting cover facing the battery cells, and the weight-reducing member has a density lower than the density of the sealing member;
preferably, the weight-reducing member is a hollow tube.

Optionally, the sealing member is arranged around the weight-reducing member and forms the grooves.

Optionally, the weight-reducing portion is an annular protrusion integrally formed with the potting cover; further
the sealing member is arranged around the weight-reducing portion and forms the holes.

Optionally, the holes do not communicate with the grooves; and/or
extension lengths of the grooves are greater than extension lengths of the holes; and/or
in a thickness direction of the sealing member, depths of the hole are greater than depths of the grooves; and/or
extension directions of the grooves are parallel to extension directions of the holes.

Optionally, at least some of the plurality of battery cells are stacked, the weight-reducing portion is arranged between the electrode tabs of adjacent battery cells, and/or the weight-reducing member is arranged between the electrode tabs of the adjacent battery cells.

Optionally, in a direction perpendicular to a length direction of the weight-reducing member, a cross-section of the weight-reducing member is trapezoidal, and a side of the cross-section close to the potting cover is shorter than a side away from the potting cover.

Optionally, a limiting member is provided on a side of the weight-reducing member close to the busbar member to limit a distance between the weight-reducing member and the busbar member;
further, in a height direction of each of the battery cells, a height of the limiting member is H, where H satisfies: 2 mm ≤ H ≤ 10 mm.

Optionally, when the battery pack is inverted and the sealing member is formed, in a vertical direction, a top of the sealing member is higher than a top sealed edge of each of the battery cells, and is lower than a top of the weight-reducing portion and higher than or equal to a top of the weight-reducing member;
preferably, a height of the sealing member exceeds the top sealed edge of the battery cell by h, where h satisfies: 1 mm ≤ h ≤ 7 mm.

Optionally, the potting cover is provided with a snap that snaps to an edge of the busbar member.

Optionally, a plurality of exhaust holes are provided in the busbar member.

An electric device includes the battery pack of any one of the above aspects.

According to the battery pack according to the present application, the sealing member that seals the busbar member and the electrode tabs is formed by curing an adhesive. During the curing of the adhesive into the sealing member, a removable mold or a non-removable mold is provided to form the grooves and/or the holes in the sealing member. The electrode tabs and the busbar member need to be sealed by the sealing member in order to prevent corrosive liquid or dust from entering the busbar plate and the battery cells from above the battery pack to prevent corrosion of the electrode tabs and the busbar member and avoid impairment of the sampling function of the busbar member. With this arrangement, while ensuring the sealing performance of an adhesive layer for the busbar member, forming the grooves and/or the holes in the sealing member allows the amount of adhesive to be reduced without changing the thickness of an adhesive layer. That is, the amount of the adhesive used can be minimized while ensuring the required sealing level for the busbar member, thereby reducing the weight of the sealing member and thus the weight of the battery pack, so as to achieve the purpose of weight reduction of the battery pack.

### BRIEF DESCRIPTION OF THE DRAWINGS

To describe technical solutions in embodiments of the present application or in the prior art more clearly, the following briefly describes the drawings needed for describing the embodiments or the prior art. It is clear that the drawings in the following descriptions are merely some of embodiments of the present application, and a person of ordinary skill in the art may still derive other drawings from the provided drawings without creative efforts.
FIG. 1 is a schematic structural diagram of a battery cell, a busbar member, and a potting cover according to an embodiment of the present application.
FIG. 2 is a top view of a potting cover according to an embodiment of the present application.
FIG. 3 is a structural schematic diagram of a potting cover according to an embodiment of the present application.
FIG. 4 is a side view of a battery cell, a busbar member and a potting cover according to an embodiment of the present application.
FIG. 5 is an exploded view of a battery cell, a busbar member and a potting cover before potting according to an embodiment of the present application.
FIG. 6 is an exploded view of a battery cell and a busbar member according to an embodiment of the present application.
FIG. 7 is an exploded view of a battery cell, a sealing member, and a potting cover after potting according to an embodiment of the present application.
FIG. 8 is a schematic structural diagram of a potting cover and an adhesive layer according to an embodiment of the present application.
FIG. 9 is a schematic structural diagram of a sealing member according to an embodiment of the present application.
FIG. 10 is an enlarged view of part M of FIG. 4.

### Reference numerals

1. Battery cell; 2. Busbar member; 3. Sealing member; 4. Potting cover; 5. Weight-reducing member;
11. Top sealed edge; 21. Exhaust hole; 31. Hole; 32. Groove; 33. Fixing recess; 41. Weight-reducing portion; 42. Snap.

### DETAILED DESCRIPTION OF THE EMBODIMENTS

The present application provides a battery pack. The present application further provides an electric device including the above battery pack.

Technical solutions in embodiments of the present application are clearly and completely described below with reference to the drawings in the embodiments of the present application. Apparently, the embodiments described are merely part rather than all of the embodiments of the present application. All other embodiments obtained by a person of ordinary skill in the art based on the embodiments of the present application without creative efforts shall fall within the scope of protection of the present application.

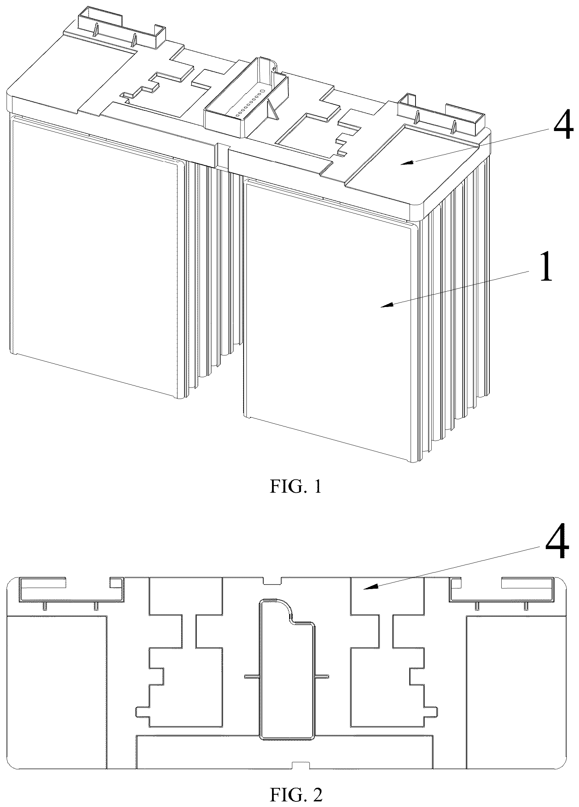

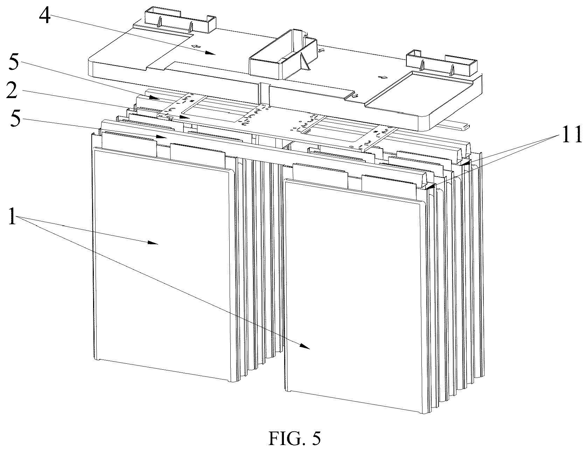

As shown in FIGS. 1 to 10, the embodiments of the present application provide a battery pack which is configured to be mounted on an electric device to supply power to the electric device. The battery pack mainly includes a housing, battery cells 1, a busbar member 2, and a sealing member 3. The housing (not shown) is configured to provide an accommodating space for components of the battery pack, such as the battery cells 1, the busbar member 2, and the sealing member 3. A plurality of battery cells 1 are provided. Each of the cells 1 is formed by winding or stacking a positive electrode plate, a negative electrode plate, and a separator disposed between the positive electrode plate and the negative electrode plate. The connection relationship between the plurality of cells 1 is not defined here. For example, it is possible that the plurality of cells 1 are connected in series or in parallel, or that some of the cells 1 are connected in series and some of the cells 1 are connected in parallel. The busbar member 2 is connected to electrode tabs of the battery cells 1. In particular, the busbar member 2 includes a connecting end connected to the electrode tabs of the battery cells 1 and a connecting end connected to a BMS board of the battery pack. The busbar member 2 is configured to transfer the voltage information of the battery cells 1 to the BMS board, thereby enabling voltage measurement of the plurality of battery cells 1. The sealing member 3 is configured to seal the busbar member 2 and the electrode tabs, and the sealing member 3 is typically formed by curing an insulating adhesive.

In particular, grooves 32 and/or holes 31 are provided in the sealing member 3. In an optional implementation provided in this embodiment, a potting cover 4 carrying the adhesive is provided. The potting cover 4 is connected to the busbar member 2 and is provided with a weight-reducing structure at a position where the adhesive forms the sealing member 3. During the process of injecting the adhesive into the battery pack to form the sealing member 3, the weight-reducing structure occupies part of the space for the adhesive, thereby allowing the sealing member 3 to form the holes 31 and/or the grooves 32. It should be noted that in this configuration, the potting cover 4 is not removed after the potting process, that is, the potting cover 4 is bonded to the sealing member 3. The weight-reducing structure may be removed. Of course, the density of the weight-reducing structure may be set lower than that of the adhesive, which can also achieve the effect of reduction in the weight of the battery pack. In another optional implementation provided in this embodiment, a mold (not shown) carrying the adhesive is provided. The mold includes at least a carrying mold for carrying the adhesive and a weight-reducing mold for forming the holes 31 and/or the grooves 32 of the sealing member 3. To facilitate removal, a release agent may be applied to the mold. During the process of injecting the adhesive into the battery pack to form the sealing member 3, after the adhesive cures to form the sealing member 3, the mold is removed, thereby forming the sealing member 3 with the holes 31 and/or the grooves 32.

It should be noted that the battery pack in the present application is preferably configured for being mounting in an aircraft. That is, the battery pack of the present application is intended for use in the field of aircrafts. Here, the term "aircraft" refers to a man-made mechanical flying object capable of flight above the ground, either in the atmosphere or in the outer space. As an example, the aircraft may be a piloted airplane, an unmanned aerial vehicle, a spacecraft, a satellite, an aeronautical vehicle, a rocket, a missile, and the like. Since the above battery pack is mounted in an aircraft, in the field of aircrafts, it is desirable to minimize the weight of the aircraft while ensuring flight safety. Reducing the weight of an aircraft in the field of aircrafts is a challenge that a person skilled in the art urgently needs to address. The battery pack mounted in an aircraft according to the present application reduces the weight of the aircraft by reducing the weight of the battery pack, thereby enhancing various performance aspects of the aircraft, such as increasing payload capacity, extending flight range, improving flight speed, enhancing maneuverability, reducing energy consumption, and lowering the cost of the aircraft.

It should also be noted that the busbar member 2 may be a PCB board or an FPC board.

The battery pack of the above structure forms a sealing member 3 for the busbar member 2 and the electrode tabs by curing an adhesive, and during the curing of the adhesive into the sealing member 3, a removable mold or a non-removable mold is provided to form the grooves 32 and/or the holes 31 in the sealing member 3. With this arrangement, while ensuring the sealing performance of an adhesive layer for the busbar member 2, forming the grooves 32 and/or the holes 31 in the sealing member 3 allows the amount of adhesive to be reduced without changing the thickness of an adhesive layer. That is, the amount of the adhesive used can be minimized while ensuring the required sealing level for the busbar member 2, thereby reducing the weight of the sealing member 3 and thus the weight of the battery pack, so as to achieve the purpose of weight reduction of the battery pack.

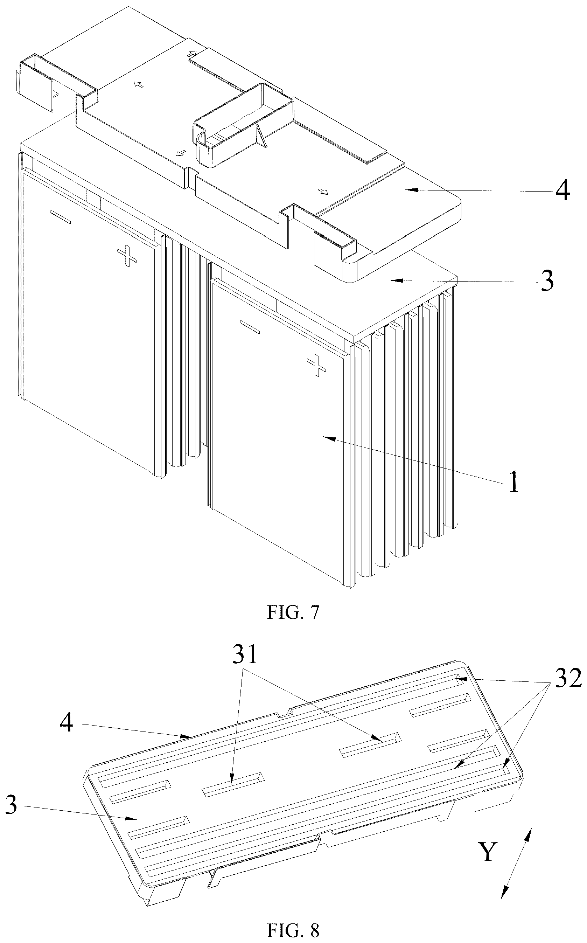

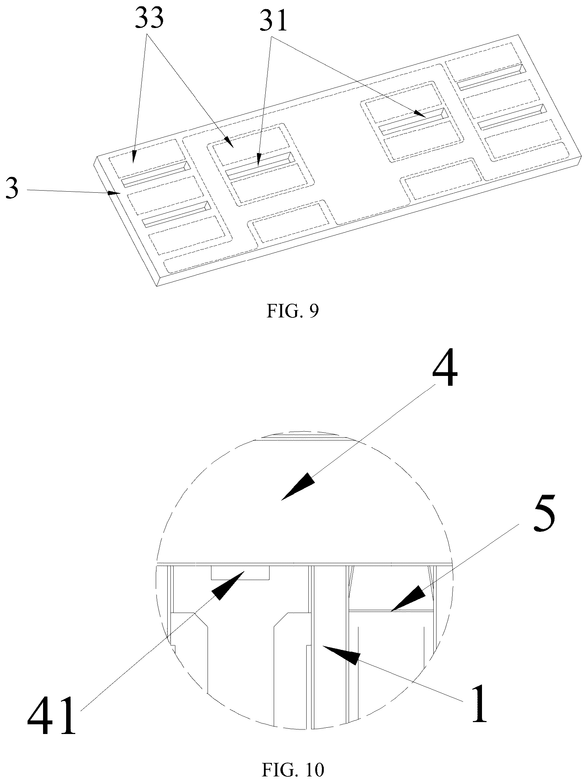

In some embodiments, referring to FIGS. 8 and 9, the sealing member 3 is provided with fixing recesses 33 for accommodating and fixing the electrode tabs. In particular, the sealing member 3 is typically formed by curing an adhesive, and the fixing recesses 33 fit with the electrode tabs. The fixing recesses 33 of the sealing member 3 facilitate fixing the electrode tabs and further avoids the displacement of the electrode tabs, thereby enhancing the effect of fixing the electrode tabs.

Furthermore, when the fixing recesses 33 are in communication with the grooves 32, or the fixing recesses 33 are in communication with the holes 31, a contact area between the sealing member 3 and the electrode tabs is reduced, thus affecting the effect of the sealing member 3 to fix the electrode tabs and ultimately compromising the sealing effect of the sealing member 3. Accordingly, in a further embodiment of the present application, the grooves 32 are not in communication with the fixing recesses 33, and/or the holes 31 are not in communication with the fixing recesses 33, thereby enhancing the sealing effect of the sealing member 3.

In some embodiments, referring to FIGS. 1 to 8, the battery pack further includes a potting cover 4, where the potting cover 4 is connected to the busbar member 2 and can receive the sealing member 3 that seals the busbar member 2 and the electrode tabs. In particular, when the adhesive is potted into the potting cover 4 to form the sealing member 3 that seals the busbar member 2 and the electrode tabs, the potting cover 4 is bonded together with the sealing member 3. Compared with the above implementation in which mold removal is performed after potting, the implementation in which the potting cover 4 is provided allows to reduce subsequent mold removal steps, thereby enhancing the efficiency of forming the sealing member 3 by potting, and enhancing the assembly efficiency of the battery pack. Furthermore, the provision of the potting cover 4 can support the sealed busbar member 2 and the sealing member 3, thereby enhancing the structural stability.

In some embodiments, the sealing member 3 encapsulates heads of the electrode tabs and the busbar member 2, and a surface of the sealing member 3 close to the potting cover 4 abuts against the potting cover 4. That is, the sealing member 3 is provided between the electrode tabs and the potting cover 4, and the sealing member 3 is also provided between the busbar member 2 and the potting cover 4, such that the sealing member 3 encapsulates the heads of the electrode tabs and the busbar member 2, thus enhancing the sealing effect of the sealing member 3 on the electrode tabs and the busbar member 2.

It should be noted that the sealing member 3 encapsulating the heads of the electrode tabs and the busbar member 2 means that the heads of the electrode tabs and the busbar member 2 are located within the sealing member 3. Accordingly, the heads of the electrode tabs refer to the bent portions of the electrode tabs.

In some embodiments, the sealing member 3 is formed by curing a foaming or potting adhesive. Such an arrangement can enhance the sealing effect of the cured sealing member 3 on the busbar member 2 and the electrode tabs and enhance the structural stability.

It should be noted that the foaming adhesive refers to a product combining aerosol technology and polyurethane foam technology, and the potting adhesive is a liquid material for bonding, sealing, potting, and coating protection of electronic components.

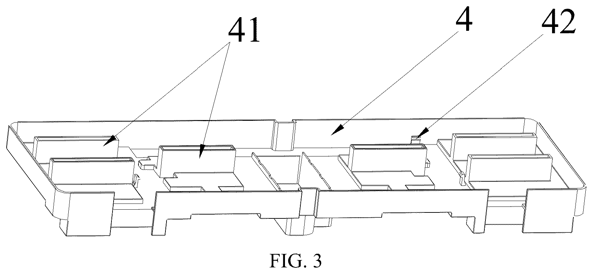

In some embodiments, referring to FIGS. 3 to 7, a weight-reducing portion 41 for blocking the grooves 32 and/or the holes 31 of the sealing member 3 is projected on a side of the potting cover 4 facing the battery cells 1. That is, during the process of potting the adhesive into the potting cover 4 and curing the adhesive to form the sealing member 3 that seals the sealed busbar member 2 and the electrode tabs, the weight-reducing portion 41 is provided on the side of the potting cover 4 facing the battery cells 1 before potting. The weight-reducing portion 41 occupies part of the potting space, which enables the adhesive-cured sealing member 3 to form the grooves 32 and/or the holes 31, and ensures that the density of the weight-reducing portion 41 is lower than that of the sealing member 3. Compared with a solution with no weight-reducing member 5, such an arrangement can reduce the weight of the sealing member 3, thereby achieving a reduction in the weight of the battery pack.

In some embodiments, referring to FIGS. 8 and 9, the weight-reducing member 5 for blocking the grooves 32 and/or the holes 31 of the sealing member 3 is provided on the side of the potting cover 4 facing the battery cells 1. That is, during the process of potting the adhesive into the potting cover 4 and curing the adhesive to form the sealing member 3 that seals the sealed busbar member 2 and the electrode tabs, the weight-reducing member 5 is provided on the side of the potting cover 4 facing the battery cells 1 before potting. The weight-reducing member 5 occupies part of the potting space, which enables the adhesive-cured sealing member 3 to form the grooves 32 and/or the holes 31, and ensures that the density of the weight-reducing member 5 is lower than that of the sealing member 3. Compared with a solution with no weight-reducing member 5, such an arrangement can reduce the weight of the sealing member 3, thereby achieving a reduction in the weight of the battery pack.

It should be noted that no specific limitation is imposed on the provisions of the weight-reducing portion 41 and the weight-reducing member 5. Only the weight-reducing portion 41 may be provided, or only the weight-reducing member 5 may be provided, or both the weight-reducing portion 41 and the weight-reducing member 5 may be provided. Furthermore, no specific limitation is imposed on the number of the weight-reducing portions 41 and weight-reducing members 5, and one or more weight-reducing portions 41 and weight-reducing members 5 may be provided.

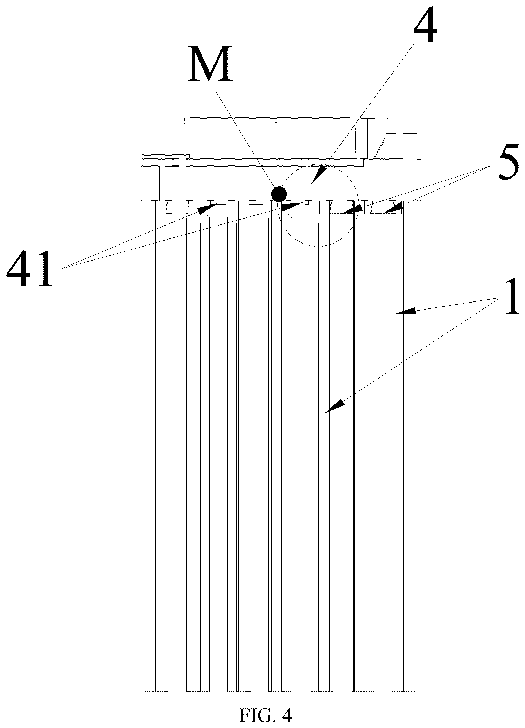

In some embodiments, referring to FIG. 4, the weight-reducing member 5 is provided as a hollow tube. Such an arrangement can further reduce the weight of the weight-reducing member 5 and further reduce the weight of the battery pack, enhancing the effect of weight reduction of the battery pack.

It should be noted that the purpose of weight reduction of the battery pack can be achieved simply by ensuring that the weight-reducing member 5 has a density lower than that of the adhesive-cured sealing member 3. As an example, the weight-reducing member 5 may be a lightweight structure such as a foam tube or a sponge tube.

In some embodiments, referring to FIG. 8 and FIG. 10, the sealing member 3 is arranged around the weight-reducing member 5 and forms the grooves 32. That is, the weight-reducing member 5 is filled in the groove 32. It can be seen from the above embodiments that the sealing member 3 is formed by curing a foaming adhesive or a potting adhesive. After the foaming adhesive or the potting adhesive is cured to form the sealing member 3, the sealing member 3 is bonded to the weight-reducing member 5, which can ensure the sealing effect of the sealing member 3 while reducing the weight of the sealing member 3.

In some embodiments, referring to FIG. 3, the weight-reducing portion 41 is provided as an annular protrusion integrally formed with the potting cover 4. That is, the weight-reducing portion 41 is a hollow protrusion, which can further reduce the weight of the battery pack compared with a solid protrusion, thereby further enhancing the weight-reduction effect.

It should be noted that the purpose of weight reduction of the battery pack can be achieved simply by ensuring that the weight-reducing member 5 has a density lower than that of the adhesive-cured sealing member 3. In addition, the weight-reducing portion 41 and the potting cover 4 may be configured in other forms. For example, the weight-reducing portion 41 and the potting cover 4 may be provided as separate components, and the weight-reducing portion 41 and the potting cover 4 are connected by bonding, snap-fitting, or other suitable ways.

In some embodiments, referring to FIGS. 8 and 9, the sealing member 3 is arranged around the weight-reducing portion 41 and forms the groove 31. That is, the sealing member 6 is formed by curing a foam adhesive or a potting adhesive, with a part of the weight-reducing portion 41 filled in the foam adhesive or the potting adhesive. As such, after the foaming adhesive or the potting adhesive is cured to form the sealing member 3, the sealing member 3 is bonded to the weight-reducing portion 41, and the weight-reducing portion 41 is either part of the potting cover 4 or connected to the potting cover 4, which enhances the bonding between the sealing member 3 and the potting cover 4, enhances the structural stability of the sealing member 3 and the potting cover 4, and ensures the sealing effect of the sealing member 3 while reducing the weight of the sealing member 3.

In some embodiments, referring to FIG. 8, when the holes 31 are in communication with the grooves 32, the amount of the adhesive filled at this position is reduced, resulting in a smaller thickness and reduced weight of the sealing member 3 at this position. Consequently, the structural stability of the sealing member 3 is decreased, and the sealing member 3 at this position may fracture when the subsequently assembled battery pack undergoes unavoidable waggles. Then, in this embodiment, the holes 31 are not in communication with the grooves 32, which can enhance the structural stability of the sealing member 3 at this position and enhance the sealing effect of the sealing member 3 on the electrode tabs and the busbar member 2.

In some embodiments, referring to FIG. 8, an extension length of the grooves 32 is greater than extension lengths of the holes 31. In particular, in a thickness direction of the sealing member 3, a region of the sealing member 3 with the holes 31 has lower structural strength than a region of the sealing member 3 with the grooves 32 because the holes 31 run through the sealing member. By ensuring that the extension lengths of the grooves 32 are greater than the extension lengths of the holes 31, the structural strength of the sealing member 3 can be ensured while the weight of the sealing member 3 is further reduced.

In some embodiments, referring to FIG. 8, in the thickness direction of the sealing member 3, depths of the holes 31 are greater than depths of the grooves 32. Since the holes 31 run through the sealing member 3 in the thickness direction of the sealing member 3 and the grooves 32 does not run through the sealing member 3, the provision of the holes 31 can further reduce the weight of the sealing member 3 compared with the provision of the grooves 32.

It should be noted that the thickness direction of the sealing member 3 refers to a direction indicated by the bidirectional arrow Y in FIG. 8.

In some embodiments, referring to FIG. 8, extension directions of the grooves 32 are parallel to extension directions of the holes 31. With this arrangement, compared with an arrangement in which the extension directions of the grooves 32 intersect with the extension directions of the holes 31, the arrangement in this embodiment can enhance the stiffness of the sealing member 3. When the sealing member 3 is subjected to external forces, the forces are distributed across various portions of the sealing member 3, avoiding the fracture of the sealing member 3 during unavoidable vibrations of the battery pack and thereby enhancing the structural strength of the sealing member 3.

As an example, the extension directions of the grooves 32 and the extension directions of the holes 31 are the length direction of the sealing member 3.

In some embodiments, referring to FIG. 1 and FIG. 4, at least some of the plurality of battery cells 1 are stacked, the weight-reducing portion 41 is arranged between adjacent battery cells 1, and/or the weight-reducing member 5 is arranged between adjacent battery cells 1. In particular, during the process of potting the battery pack to form the sealing member 3, the battery cells 1 are first stacked. Thereafter, an electrode tab bracket is provided to weld positive electrode tabs and a negative electrode tab of the battery cells 1 to the busbar member 2. After the welding is completed, the electrode tab bracket can be removed to further reduce the weight of the battery pack. Next, the potting cover 4 is mounted with the busbar member 2, and the weight-reducing member 5 is mounted on the side of the potting cover 4 close to the battery cells 1. Next, the above assembled battery cell assembly is mounted into the housing. Then, the battery cell assembly mounted in the housing is inverted as a whole, and the adhesive is potted into the potting cover 4 via the potting hole on the housing, allowing the adhesive to flow into the potting cover to seal the busbar member 2 and the electrode tabs of the battery cells 1. Finally, after the adhesive has cured to form the sealing member 3, the housing and the battery cell 1 assembly are returned to an upright position, to complete subsequent assembly steps of the battery pack. Since the top widths of the battery cells 1 where the electrode tabs are provided are smaller than the widths of the battery cells 1, a gap between adjacent battery cells 1 at the top is relatively large. Accordingly, by providing the weight-reducing portion 41 and/or the weight-reducing member 5 between adjacent battery cells 1, the provision of the weight-reducing portion 41 and/or the weight-reducing member 5 can be facilitated to allow for a more compact internal layout of the battery pack and enable the weight-reducing portion 41 and/or the weight-reducing member 5 to occupy more potting space, so as to enhance the weight-reducing effect on the sealing member 3 and further reduce the overall weight of the battery pack.

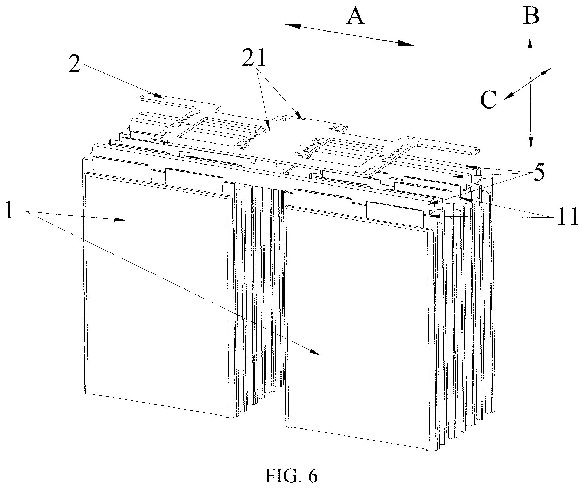

In some embodiments, referring to FIG. 6, in an example of the battery cells 1 placed upright, curling may inevitably occur at top regions of the battery cells 1 close to the electrode tabs, causing a distance between adjacent battery cells 1 at the regions of the battery cells 1 close to the electrode tabs to decrease. When a cross-section of the weight-reducing member 5 is rectangular, the distance between the top of the hollow tube and the curled portions of the battery cells 1 may become too small. During the process of potting the adhesive into the potting cover 4, this reduced distance between the weight-reducing member 5 and the curled portions of the battery cells 1 may lead to bubble formation at this position, affecting the molding quality of the sealing member 3. Accordingly, in a direction perpendicular to a length direction of the weight-reducing member 5, a cross-section of the weight-reducing member 5 is trapezoidal, and a side of the cross-section close to the potting cover 4 is shorter than a side away from the potting cover 4. In this way, the distance between the weight-reducing member 5 and the curled portions of the battery cells 1 can be increased, to avoid bubble formation in the adhesive during the potting process, thereby enhancing the structural stability of the sealing member 3 formed after adhesive curing and enhancing the sealing effect of the sealing member 3 on the busbar member 2.

As an example, the length direction of the weight-reducing member 5 may be a direction indicated by the bidirectional arrow A in FIG. 6, and a direction perpendicular to the length direction of the weight-reducing member 5 may refer to a plane defined by arrows B and C in FIG. 6.

In some embodiments, referring to FIG. 1, it can be seen from the above potting process of the busbar member 2 that, after the potting cover 4 and the busbar member 2 are mounted together, when the assembled battery cell 1 assembly and the potting cover 4 are in an upright state, the weight-reducing member 5 may be inserted from the top regions of the battery cells 1 into a space between adjacent battery cells 1. Thereafter, the above assembled components may be placed into the housing, and then the components placed in the housing may be inverted. In this case, the weight-reducing member 5 may move toward the potting cover 4 under its own gravity and fit with the busbar member 2. In this way, during the potting process, when the gap between the weight-reducing member 5 and the busbar member 2 is too small, the adhesive may not flow into the space between the weight-reducing member 5 and the busbar member 2, that is, bubble formation between the weight-reducing member 5 and the busbar member 2 is caused, resulting in a reduced sealing effect of the adhesive on the busbar member 2. Accordingly, a limiting member (not shown) is provided on a side of the weight-reducing member 5 close to the busbar member 2 to limit a distance between the weight-reducing member 5 and the busbar member 2. In this way, during the potting process, the adhesive can fill the space between the busbar member 2 and the weight-reducing member 5, thereby enhancing the sealing effect on the busbar member 2.

As an example, the limiting member may be one of, or a combination of, structures such as foam, a hollow tube, or spaced-apart support blocks.

In some embodiments, in a height direction of the battery cells 1, a height of the limiting member is H, where H satisfies: 2 mm ≤ H ≤ 10 mm. Here, ensuring that the height of the limiting member is within the above range can avoid an excessively small dimension of the limiting member, thereby avoiding bubble formation between the weight-reducing member 5 and the busbar member 2 during the potting process, and enhancing the sealing effect of the sealing member 3 on the busbar member 2. It can also avoid an excessively large height of the limiting member, thereby avoiding the weight-reducing member 5 from occupying too small part of the potting space and avoiding the weight reduction of the battery pack from being insufficient.

It should be noted that the height of the limiting member refers to the dimension of the limiting member in the direction indicated by the bidirectional arrow B in FIG. 6.

As an example, the height H of the limiting member may be 2 mm, 3 mm, 4 mm, 5 mm, 6 mm, 7 mm, 8 mm, 9 mm, 10 mm, or the like.

In some embodiments, when the battery pack is inverted and the sealing member 3 is being formed, that is, during the process in which the battery pack is potted with the adhesive and the adhesive is curing to form the sealing member 3, the top of the sealing member 3 is higher than a top sealed edge 11 of the battery cell 1 in a vertical direction, thereby ensuring that the sealing member 3 meets the sealing requirements for the busbar member 2 and the electrode tabs, and ensuring the sealing effect on the busbar member 2 and the electrode tabs. Furthermore, as described in the above embodiments, to enhance the effect of weight reduction of the battery pack, the weight-reducing portion 41 is preferably configured as an annular protrusion. That is, in the inverted state of the battery pack, the top of the weight-reducing portion 41 is open, and it is ensured that the top of the sealing member 3 is lower than the top of the weight-reducing portion 41, which can prevent the adhesive from flowing out of the opening of the annular protrusion, thereby avoiding an increase in the weight of the battery pack.

In addition, the top of the sealing member 3 needs to be higher than or equal to the top of the weight-reducing member 5. That is, during the potting process, the weight-reducing member 5 is fully submerged in the adhesive, or a top surface of the adhesive is flush with a top surface of the weight-reducing member 5. This can further reduce the amount of potted adhesive, to further reduce the weight of the battery pack while ensuring that the sealing requirements for the busbar member 2 are met.

It should be noted that the upright state of the battery pack refers to a state shown in FIG. 1 in which the potting cover 4 and the busbar member 2 are located at the top of the battery cell 1. The inverted state of the battery pack (not shown) refers to a state in which the potting cover 4 and the busbar member 2 are at the bottom and the battery cells 1 are at the top.

In some embodiments, a height of the sealing member 3 exceeds the top sealed edge 11 of the battery cell 1 by h, where h satisfies: 1 mm ≤ h ≤ 7 mm. In this case, ensuring that the height of the sealing member 3 exceeds the top sealed edge 11 by within the specified range can avoid the sealing member 3 from failing to seal the top sealed edge 11 of the battery cell 1 which otherwise resulting in failure in meeting the sealing requirements for the busbar member 2 due to insufficient sealing height. Furthermore, it is also avoided that the height of the sealing member 3 exceeds the top sealed edge 11 by a too large distance, thus avoiding an excess potted adhesive.

It should be noted that the height of the sealing member 3 refers to a dimension in the direction shown by the bidirectional arrow B in FIG. 6.

As an example, the height of the sealing member 3 above the top sealed edge 11 may be 1 mm, 2 mm, 3 mm, 4 mm, 5 mm, 6 mm, 7 mm, etc.

In some embodiments, a potting hole (not shown) is provided at an end of a sidewall of the housing close to the potting cover 4. With this arrangement, when the battery pack is inverted during the potting of the adhesive in the potting cover 4, the potting hole is arranged close to the potting cover 4, reducing the distance the adhesive needs to travel toward the potting cover 4. This avoids the adhesive from bonding to other parts of the battery pack, further reducing the amount of the adhesive used and thus, to some extent, achieving the purpose of weight reduction of the battery pack.

In some embodiments, referring to FIG. 6, an exhaust hole 21 is formed in the busbar member 2. In particular, the potting cover 4 is typically connected to the busbar member 2. To achieve a more compact layout of the battery pack and reduce the amount of the potted adhesive, the busbar member 2 fits with a wall surface of the potting cover 4. However, during the potting process for the potting cover 4, the close fit between the busbar member 2 and the potting cover 4 may hinder the flow of the adhesive into all the positions between the busbar member 2 and the potting cover 4. By providing the exhaust hole 21 in the busbar member 2, the adhesive can more easily flow into the gap between the busbar member 2 and the potting cover 4, reducing or even avoiding bubble formation between the busbar member 2 and the potting cover 4, thereby enhancing the sealing effect of the adhesive on the busbar member 2.

Furthermore, a plurality of exhaust holes 21 are provided in the busbar member 2, and the plurality of exhaust holes 21 are evenly distributed across the busbar member 2. This further reduces the formation of bubbles between the busbar member 2 and the potting cover 4, thereby enhancing the sealing effect of the adhesive-cured sealing member 3 on the busbar member 2.

In some embodiments, referring to FIG. 3, the potting cover 4 is provided with a snap 42 that snaps to an edge of the busbar member 2, allowing the potting cover 4 and the busbar member 2 to be detachably connected by means of snap-fit connection. In this case, by connecting the potting cover 4 to the busbar member 2 as described above, waggles between the potting cover 4 and the busbar member 2 can be avoided before the battery cell 1 assembly is inverted and the adhesive is potted into the potting cover 4, avoiding displacement and thus enhancing the stability of the connection. Furthermore, a connection between the busbar member 2 and the potting cover 4 is achieved by means of snap-fit connection, and the snap 42 can serve the effect of positioning and enhance the mounting efficiency of the potting cover 4.

In addition, the potting cover 4 can be connected to the busbar member 2 by other methods. For example, the potting cover 4 can be connected to the busbar member 2 by means of magnetic connection, adhesive bonding, bolt connection, etc.

An electric device includes the battery pack of any one of the above embodiments. As the electric device includes the above battery pack, the advantageous effects the battery pack brings to the electric device have been described above and are not repeated here.

It should be noted that the electric device may be an industrial electric device, such as construction machinery like crane, excavator, and the like. The electric device may be a household appliance, such as vacuum robot, refrigerator, and the like. The electric device may be a transportation vehicle, such as electric vehicle, hybrid vehicle, internal combustion engine vehicle, or the like. Of course, the electric device may be an aircraft mentioned above.

The basic principles of the present application have been described above with reference to the specific embodiments, but it should be noted that the advantages, superiorities, effects and the like mentioned in the present application are merely examples rather than limitations, and these advantages, superiorities, effects and the like cannot be considered to be necessary for all the embodiments of the present application. Moreover, the specific details disclosed above are for illustration and easy understanding but not limitation, and the above details do not restrict the present application from being implemented using the above specific details.

The block diagrams of devices, apparatuses, equipment, and systems involved in the present application are illustrative examples and are not intended to require or imply that they are connected, arranged, and configured in the manner shown in the block diagrams. As will be appreciated by a person skilled in the art, these devices, apparatuses, equipment, and systems can be connected, arranged, and configured in any way. Words such as "include", "comprise", "have", etc., are open-ended words that mean "include but is not limited to" and can be used interchangeably therewith. The words "or" and "and" as used herein refer to the words "and/or" and can be used interchangeably therewith unless the context clearly indicates otherwise. The word "such as" as used here refers to the phrase "such as, but not limited to" and can be used interchangeably therewith.

It is also to be noted that in the apparatus, device, and method of the present application, each component or each step can be decomposed and/or recombined. These decompositions and/or recombinations are to be regarded as equivalent solutions of the present application.

The above description of the disclosed aspects is provided to enable any person skilled in the art to make or use the present application. Various modifications to these aspects are readily apparent to a person skilled in the art, and the general principles defined herein may be applied to other aspects without departing from the scope of the present application. Therefore, the present application is not intended to be limited to the aspects shown herein, but to be in the broadest scope consistent with the principles and novel features disclosed herein.

It is to be understood that the qualifiers "first", "second", "third", "fourth", "fifth", and "sixth" used in the description of the embodiments of the present application are used to explain the technical solutions more clearly and are not intended to limit the scope of protection of the present application.

The above description has been given for purposes of illustration and description. In addition, this description is not intended to limit the embodiments of the present application to the form disclosed herein. While various example aspects and embodiments have been discussed above, those skilled in the art will recognize certain variations, modifications, alterations, additions and sub-combinations thereof.

## Claims

1. A battery pack, comprising:
a housing;
a plurality of battery cells located within the housing;
a busbar member connected to electrode tabs of the battery cells; and
a sealing member for sealing the busbar member and the electrode tabs and provided with holes and/or grooves.

2. The battery pack according to claim 1, wherein the sealing member is provided with fixing recesses for accommodating and fixing the electrode tabs, the grooves does not communicate with the fixing recesses, and/or the holes does not communicate with the fixing recesses.

3. The battery pack according to claim 1 or claim 2, further comprising a potting cover, wherein the potting cover is connected to the busbar member and receives the sealing member that seals the busbar member and the electrode tabs.

4. The battery pack according to claim 3, wherein the sealing member encapsulates heads of the electrode tabs and the busbar member, and a surface of the sealing member close to the potting cover abuts against the potting cover.

5. The battery pack according to claim 3 or claim 4, wherein a weight-reducing portion projects from a side of the potting cover facing the battery cells, the weight-reducing portion has a density lower than a density of the sealing member; and/or a weight-reducing member is provided on the side of the potting cover facing the battery cells, and the weight-reducing member has a density lower than the density of the sealing member;
preferably, the weight-reducing member is a hollow tube.

6. The battery pack according to claim 5, wherein the sealing member is arranged around the weight-reducing member and forms the grooves.

7. The battery pack according to claim 5 or 6, wherein the weight-reducing portion is an annular protrusion integrally formed with the potting cover; further
the sealing member is arranged around the weight-reducing portion and forms the holes.

8. The battery pack according to claim 7, wherein
the holes do not communicate with the grooves; and/or
extension lengths of the grooves are greater than extension lengths of the holes; and/or
in a thickness direction of the sealing member, depths of the hole are greater than depths of the grooves; and/or
extension directions of the grooves are parallel to extension directions of the holes.

9. The battery pack according to any one of claims 5 to 8, wherein at least some of the plurality of battery cells are stacked, the weight-reducing portion is arranged between the electrode tabs of adjacent battery cells, and/or the weight-reducing member is arranged between the electrode tabs of the adjacent battery cells.

10. The battery pack according to any one of claims 5 to 9, wherein in a direction perpendicular to a length direction of the weight-reducing member, a cross-section of the weight-reducing member is trapezoidal, and a side of the cross-section close to the potting cover is shorter than a side away from the potting cover.

11. The battery pack according to any one of claims 5 to 10, wherein a limiting member is provided on a side of the weight-reducing member close to the busbar member to limit a distance between the weight-reducing member and the busbar member; further
in a height direction of each of the battery cells, a height of the limiting member is H, wherein H satisfies: 2 mm ≤ H ≤ 10 mm.

12. The battery pack according to any one of claims 5 to 11, wherein when the battery pack is inverted and the sealing member is formed, in a vertical direction, a top of the sealing member is higher than a top sealed edge of each of the battery cells, and is lower than a top of the weight-reducing portion and higher than or equal to a top of the weight-reducing member; preferably
height of the sealing member exceeds the top sealed edge of the battery cell by h, wherein h satisfies: 1 mm ≤ h ≤ 7 mm.

13. The battery pack according to any one of claims 3 to 12, wherein the potting cover is provided with a snap that snaps to an edge of the busbar member.

14. The battery pack according to any one of claims 1 to 13, wherein a plurality of exhaust holes are provided in the busbar member.

15. An electric device, comprising the battery pack according to any one of claims 1 to 20.
